(19) Europäisches Patentamt
European Patent Office
Office européen des brevets

(11) **EP 3 913 882 B1**

(12) **EUROPEAN PATENT SPECIFICATION**

(45) Date of publication and mention
of the grant of the patent:
**24.07.2024 Bulletin 2024/30**

(21) Application number: **20176167.3**

(22) Date of filing: **22.05.2020**

(51) International Patent Classification (IPC):
*H04L 9/40* (2022.01)    *G06F 40/194* (2020.01)
*G06F 40/216* (2020.01)    *G06F 40/284* (2020.01)
*G06F 40/30* (2020.01)    *H04L 51/212* (2022.01)

(52) Cooperative Patent Classification (CPC):
**G06F 40/284; G06F 40/194; G06F 40/216;
G06F 40/30; H04L 51/212; H04L 63/1425**

(54) **METHOD AND INFORMATION PROCESSING APPARATUS FOR FLAGGING ANOMALIES IN TEXT DATA**

VERFAHREN UND INFORMATIONSVERARBEITUNGSVORRICHTUNG ZUM MARKIEREN VON ANOMALIEN IN TEXTDATEN

PROCÉDÉ ET APPAREIL DE TRAITEMENT D'INFORMATIONS POUR SIGNALER DES ANOMALIES DANS DES DONNÉES TEXTUELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **FUJITSU LIMITED
Kanagawa 211-8588 (JP)**

(72) Inventor: **TOWNSEND, Joseph
High Wycombe HP15 7AX (GB)**

(74) Representative: **Haseltine Lake Kempner LLP
Cheapside House
138 Cheapside
London EC2V 6BJ (GB)**

(56) References cited:
**US-A1- 2019 109 863**

- **DUMAN SEVTAP ET AL: "EmailProfiler: Spearphishing Filtering with Header and Stylometric Features of Emails", 2016 IEEE 40TH ANNUAL COMPUTER SOFTWARE AND APPLICATIONS CONFERENCE (COMPSAC), IEEE, vol. 1, 10 June 2016 (2016-06-10), pages 408 - 416, XP032950908, DOI: 10.1109/COMPSAC.2016.105**
- **ESTEBAN CASTILLO ET AL: "Email Threat Detection Using Distinct Neural Network Approaches", PROCEEDINGS OF THE WORKSHOP ON SOCIAL C EUROPEAN LANGUAGE RESOURCES ASSOCIATION (ELRA), LICENSED UNDER CC-BY-NC 48, 11 May 2020 (2020-05-11), pages 11 - 16, XP055736908, Retrieved from the Internet <URL:https://www.aclweb.org/anthology/2020.stoc-1.8.pdf> [retrieved on 20201006]**

**Description**

The present invention relates to a method and information processing apparatus for flagging anomalies in electronic messages.

US2019/0109863A1 discloses a method for authenticating a sender identity of an online message. Features are extracted from the message, including stylometric features, origin location features, attached file features for any files attached to the message, and embedded URL features. The extracted features can then be compared to a sender profile for a known sender identity matching the purported sender identity, or to one or more sender profiles for recognized suspicious senders if the purported sender identity does not match a known sender identity. The sender profile for a given sender identity can include features extracted from one or more messages previously sent by the sender identity. A global risk score for the message indicating a likelihood that the purported sender identity is inauthentic can be determined based at least in part upon the comparison.

It is desirable to provide an improved method of flagging suspicious electronic messages.

The present invention is defined in the independent claims, to which reference should now be made. Optional embodiments are set out in the dependent claims

An embodiment of a first aspect comprises a computer-implemented method of flagging suspicious electronic messages. The method comprises detecting an anomalous segment in natural language content of an electronic message purporting to be sent or written by a particular individual, the detection using anomaly detection rules derived from natural language message content of a set of electronic messages previously sent by the particular individual. The method further comprises, for a detected anomalous segment, identifying a segment of text in an electronic message of the set which is closest to text in the anomalous segment, and an associated rule of the anomaly detection rules which is satisfied by the closest segment, and generating a human-interpretable anomaly explanation constructed from the anomalous segment and the associated rule. The anomaly explanation is a description of why the anomalous segment does not satisfy the same anomaly detection rule as the closest segment. The method further comprises sending to an intended recipient of the electronic message an alert including the anomaly explanation to flag the electronic message as suspicious.

Detecting the anomalous segment may comprise: dividing natural language content of the electronic message purporting to be sent or written by the particular individual into segments containing at least one word, extracting a word embedding for each segment, for each word embedding, using the anomaly detection rules associated with the particular individual to determine if there is an appropriate rule for the word embedding, and if there is no appropriate rule for a word embedding, labelling the segment corresponding to the word embedding as anomalous.

The anomaly detection rules may be derived by: creating, in respect of the particular individual, a clustering model using natural language message content of the set of electronic messages previously sent by the particular individual, wherein creating the clustering model comprises: dividing natural language content of each electronic message of the set into segments containing at least one word, extracting a word embedding for each segment, and grouping the extracted word embeddings into clusters, where word embeddings sharing a similar pattern of words are assigned to the same cluster; and deriving the anomaly detection rules from the segments and their assigned clusters, the rules forming an interpretable approximation of the clustering model created for the particular individual.

Generating a human-interpretable anomaly explanation may comprise modifying a copy of the associated rule using wording from the anomalous segment so that the anomalous segment satisfies the modified copy of the associated rule. In the case that each rule has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions, modifying a copy of the associated rule may comprise negating each antecedent in the rule which is not satisfied by the anomalous segment, conjoining each negated antecedent with a literal from the anomalous segment which occupies the same position, and changing the consequent of the rule to indicate that the rule relates to an anomalous segment.

At least one additional rule-based electronic message classification method employed by the intended recipient may be updated on the basis of the anomaly explanation.

An embodiment of a second aspect comprises information processing apparatus to flag anomalies in a portion of natural language text of an electronic message purporting to be sent or written by a particular individual, the apparatus comprising: a processor; and a memory storing a clustering model and anomaly detection rules for assigning text to clusters in the clustering model, the clustering model and anomaly detection rules being derived from a training set of natural language text data derived from a set of electronic messages previously sent by the particular individual, and instructions to cause the processor to: obtain a word embedding for a segment of the natural language text portion; determine whether the word embedding fits into any cluster in the clustering model, and, if the word embedding is determined not to fit into any cluster in the clustering model, label the segment as an anomalous segment; identify a segment of text data in the training set which is closest to text in the anomalous segment, and the anomaly detection rule responsible for assigning the closest segment to a cluster in the clustering model, and generate a human-interpretable anomaly explanation based on the text of the anomalous segment and the responsible rule, where the anomaly explanation is a description of why the anomalous segment does not satisfy the same anomaly detection rule as the closest segment; and issue an alert flagging an anomaly in the portion of natural language text, the alert including the anomaly explanation.

The instructions may also cause the processor to: create the clustering model using the training set of natural language text data by: dividing natural language content of items of text data in the set into segments containing at least one word, extracting a word embedding for each segment, and grouping the extracted word embeddings into clusters, where word embeddings sharing a similar pattern of words are assigned to the same cluster; and derive rules from the segments and their assigned clusters, the rules forming an interpretable approximation of the clustering model.

Generating a human-interpretable anomaly explanation may comprise modifying a copy of the responsible rule using text from the anomaly so that the anomaly satisfies the modified copy of the responsible rule. In the case that each rule of the clustering model has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions, modifying a copy of the responsible rule comprises negating each antecedent in the rule which is not satisfied by the text of the anomaly, conjoining each negated antecedent with a literal from the text of the anomaly which occupies the same position, and changing the consequent of the rule to indicate that the rule relates to an anomaly.

The instructions may also cause at least one additional rule-based text classification method stored in the memory to be updated on the basis of the anomaly explanation.

An embodiment applied to flag potentially malicious email communications, for example, may provide an extra layer of protection should existing anomaly detection methods (blacklists, metadata analysis, etc.) fail to detect evidence of malicious behaviour. When used together with other detection methods, embodiments may provide an extra, final layer of security should an imposter circumvent these other methods. If, for example, all metadata is deemed legitimate, or even if the imposter has hijacked the alleged sender's account completely, the final clues to their deception may lie in their writing style when compared to the particular writing style of the alleged sender.

For example, anomaly detection may be specific to the writing style of one particular individual, for example when communicating with a specific user. That is, the contact in question will not only have their own writing style, but that style may have particular peculiarities when writing to a specific recipient (nicknames, formalities, etc.), and anything uncharacteristic to the written relationship may be evidence of an imposter. In such a case embodiments may detect anomalies in written relationships by learning natural language models only from messages sent from a specific contact to a specific user, using an autoencoder network and clustering embeddings learned by the same.

Some embodiments applied to detect anomalies through natural language processing of writing style may achieve this locally to a client node and independently of communication with a server or other external device(s). The independence of the node on which the solution is installed reduces the load on any server it may otherwise communicate with, or the bandwidth consumed online if it were using an internet connection, for example to verify URLs or other information in an e-mail in a security application.

Embodiments provide a human-interpretable explanation of a detected anomaly. For example, a rule extraction method may be applied to learn explanations of cluster assignments, for example in the form of a rule derived by taking a rule satisfied by the closest non-anomalous data segment and modifying the rule so that the anomaly satisfies it.

Reference will now be made, by way of example, to the accompanying drawings, in which:

Figure 1 shows a vector of a sequence of words;
Figure 2 shows a 2D representation of the sequence of words;
Figure 3 shows a 1D representation of the sequence of words;
Figure 4 illustrates a method of training an autoencoder;
Figure 5 depicts clusters of word embeddings, plus two anomalies;
Figure 6 illustrates a tree-based approach to rule extraction;
Figure 7 is a flowchart of a method embodying the present invention;
Figure 8 is a flowchart of a process for use in the method of Figure 7;
Figure 9 is a flowchart of another process for use in the method of Figure 7;
Figure 10 is a flowchart exemplifying a method embodying the present invention;
Figure 11 is a flowchart of a model training process used in the method of Figure 10;
Figure 12 illustrates a pre-processing process used in the method of Figure 10;
Figure 13 is a flowchart of an anomaly detection process and an explanation derivation process used in the method of Figure 10;
Figure 14 illustrates examples of clusters of a clustering model with exemplary training and test data;
Figure 15 illustrates an example of a suspicious electronic message with an explanatory alert; and
Figure 16 is a block diagram of a computing device suitable for carrying out a method according to an embodiment.

The embodiment described below relates to detection of anomalies in text data, in particular the scrutiny of natural language content of electronic messages such as emails for security purposes.

**Anomaly Detection in Electronic Messages**

Phishing is responsible for 80-90% of cyber attacks and the number of these is on the rise at a linear rate. One reason for this is that it is easier to deceive a human than it is to deceive a machine such as a firewall or intrusion detection system (IDS). For example, is it easier for a hacker to trick a target user into opening a malicious link that installs malware than it is for that hacker to penetrate a firewall so that they may install the malware themselves.

Many different approaches have been proposed for detecting phishing e-mails. Perhaps among the simplest are blacklisting (addresses/domains listed as untrustworthy are blocked) and whitelisting (domains/addresses not listed as trustworthy are blocked).

Other methods perform some form of processing on features extracted from the content or metadata of e-mails, attachments (which may be malicious) or URLs which the e-mails link to (which may link to malicious sources). Examples include the number of words in the text, length of URLs, the number of dots in URLS, frequencies of individual words, size of images, etc. Such features are discrete, but latent features such as those extracted by neural networks may also be used.

Some methods applied to discrete methods are rule-based. For example, an e-mail may be classified as suspicious if the addressee is generic ('Dear Customer', 'Dear User', etc.), or if one of the following is true of a URL contained within the e-mail: the URL is an IP address, the domain name does not match the domain of the sender, or the domain does not match the domain presented in the link text.

Discrete or latent features may also be provided as the input to a machine learning process that learns to classify whether or not an e-mail is a phishing e-mail.

Blacklisting and whitelisting detection methods assume prior knowledge of trustworthy/ untrustworthy domains and must be updated each time a new domain is deemed trustworthy or untrustworthy. Furthermore, such methods do not provide warnings of imposters who have hijacked legitimate sources. Rule-based detection methods may lack adaptability. Methods which classify phishing by following links in the e-mail, searching the web, communicating with a server or otherwise traversing internal or external networks consume bandwidth.

As mentioned above, if a malicious e-mail purporting to be from one of the recipient's contacts bypasses such other detection methods, the final clues to the fact that the sender is an imposter may lie in the writing style. The discovery of such anomalies, if formalized, may be used to configure detection rules that catch further instances earlier in the process.

However, in the case of detecting an imposter, writing style may only be compared against that of the individual they are attempting to impersonate and no other. Therefore any anomaly detection methods applied must be specific to that individual. Existing anomaly detection methods specific to an individual's e-mails lack one or both of the following:

- Local detection independent of communication with a server or the internet
- Detection of anomalies in the natural language in the body of the e-mail.

Furthermore, existing art does not present detected anomalies with human-interpretable explanations. Although models of explaining classifications are widespread, methods of explaining anomalies are less common, and the few there are address numerical or tabular data only, not text or natural language. Explanation of natural language *classifications* exist, but not anomalies.

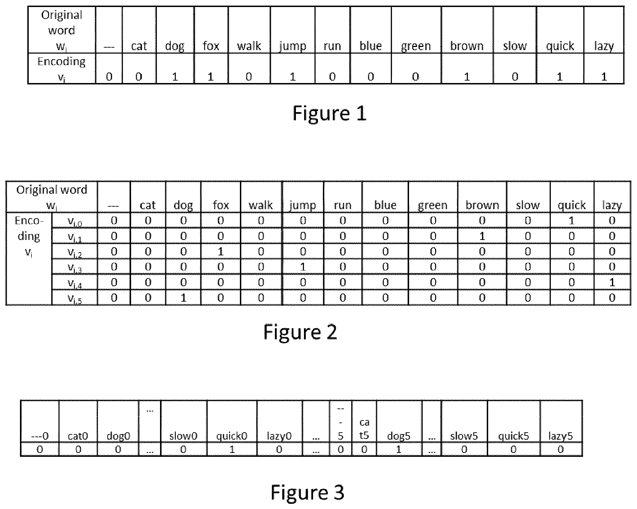

Text data is often translated to binary using an encoding in which a vector v contains an element for a set of n possible words (usually the most common in the set) where $v_i = 1$ if the word is present in that sentence or 0 otherwise. The first element $v_0$ is often reserved for unknown words (represented by "---" in Figure 1 and elsewhere in this document). Before encoding, some pre-processing is usually (but not necessarily) performed first, including but not limited to:

- 'Lemmatising' or 'stemming' individual words: both are processes in which words are converted to base forms (e.g. 'walking' to 'walk').
- Removal of so-called 'stop words' that are so common as to be irrelevant (such as 'and', 'it', etc.) are usually filtered out.

For example, given a vector of words "the quick brown fox jumps over the lazy dog" a binary encoding v , that also contains other words such as 'cat', 'green' and others, may appear as shown in Figure 1.

Alternatively, to preserve the sequential order of words, a (6 x 12) 2D representation may be made as shown in Figure 2. This representation may be 'flattened' into a (1 x 72) 1D representation as in Figure 3. A word followed by an integer (e.g. catO, cat5, run3, slow5, etc.), as shown in Figure 3, is referred to as a 'word position'.

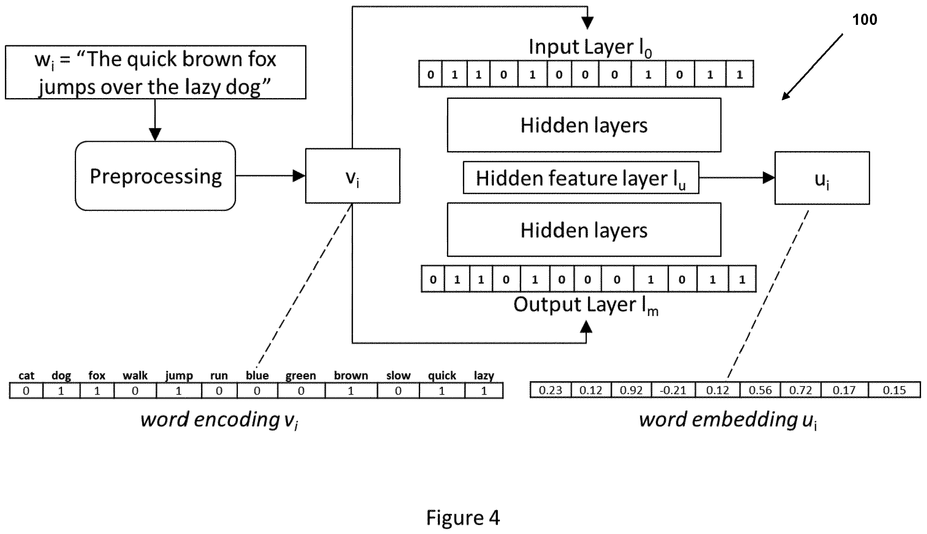

Word encodings may be compressed into smaller feature vectors using a form of processing known as 'embedding'. One embedding method uses an autoencoder, a neural network which is trained to recreate its own input such that the activations at intermediate hidden layers for a given input reflect a compressed representation of that input. Usually feature vectors are extracted from the middle layer of the network. In the context of natural language processing, feature vectors may be referred to as 'word embeddings'. Text embedding methods are not limited to autoencoders. For example, GOOGLE™'s Word2Vec method learns embeddings by mapping words to their surrounding contexts. Figure 4 illustrates a method of training an autoencoder 100 to learn a word embedding $u_i$ for the sentence "The quick brown fox jumps over the lazy dog".

Any of the above approaches may be applied to content, metadata (or both) of either an e-mail, web pages linked to in the e-mail, or both.

As an alternative, or in addition, to classification-based methods, many AI, machine-learning or automation-based approaches to detecting cyber threats (e-mail or otherwise) focus mainly on anomaly detection. In other words, rather than or in addition to asserting that certain behaviour is or is not a known specific type of threat (classification), they detect behaviour that is not normal and alert some other agent (human or machine) to further assess and respond to the anomaly.

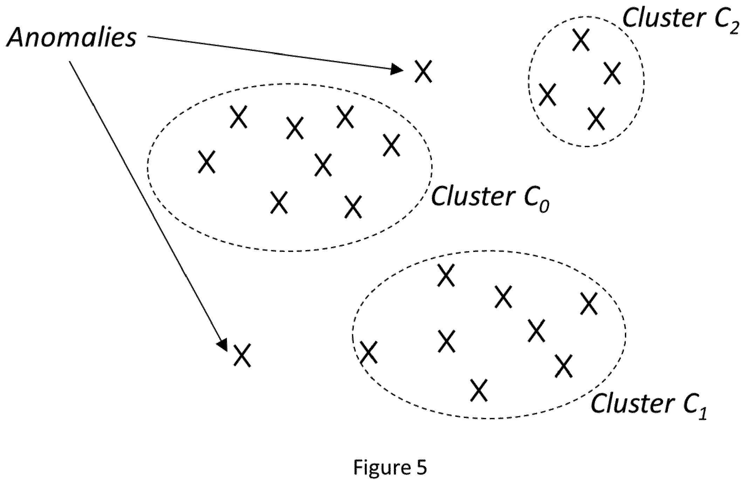

A common method for implementing anomaly-detection models for text is to assess the distance of a word embedding from other embeddings. If the distance is beyond a given threshold, then the text represented by that embedding is regarded as anomalous. For example, if a set of normal embeddings are grouped into clusters (as shown in Figure 5, where each embedding is represented by an X), a new embedding may be marked as an anomaly if it is not found to belong to any of those clusters (i.e. beyond some number of standard deviations from each cluster's mean).

Many anomaly detection methods in cyber security baseline against what is normal for a network or institution as a whole, or even for a user among all of their contacts. However, any method which generalises across multiple individuals struggles to capture idiosyncratic characteristics. UEBA (User Entity Behaviour Analytics) is a system in which anomaly detection is applied to behaviour of specific entities, either that of specific users and/or that of entities on the network such as specific nodes, devices, applications etc. UEBA generally uses data from multiple sources, logs etc. to monitor user activity. User-specific examples which have been applied to emails include one which compares metadata values, and another which sends incoming and outgoing timestamps from recipient and sender respectively and then shares this information with a server which checks for inconsistencies.

Further to classifying text, methods of explaining the reasons for assigning the classifications have been proposed. Some are 'feature based', in that they highlight words or other-substrings of individual data samples which are important with respect to assigning that sample to a given class. Others are rule-based, in that they do the same, but also yield rules which explain how the specific relationships between combinations of those substrings lead to the classification.

However, none of these consider the task of anomaly detection, i.e. identifying and explaining anomalous text. Technology for explaining anomalies in numerical and tabular data does exist. Given a sample that has been marked as anomalous, attributes with high deviation from their expected values (based on non-anomalous samples) are selected, and tree-based extraction methods are used to construct rules that explain why the expected value was to be expected. A method for explaining anomalies in intrusion detection systems exists, applying rule construction directly to a classifier's inputs and outputs, treating the classifier as a black box. Aside from rule-based explanations, it is more common for anomalies to be 'explained' through visualisations of, or correlations between, data fields related to an anomaly.

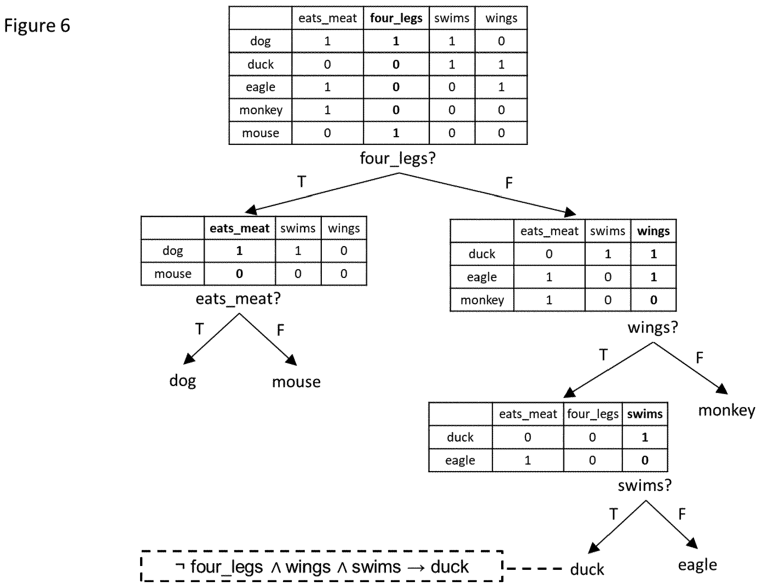

A particular family of rule extraction methods which will be referred to later in this application are tree-based approaches in which each path from a root node to a leaf node corresponds to a separate rule. The general approach to these methods, illustrated in Figure 6, is as follows. First, inputs are in some way quantized or binarized, i.e. mapped to binary truth values. Starting from the root, each tree node first takes the binarized feature which yields the highest information gain (i.e. the feature which is most useful in mapping inputs to the classification domain) and then branches based on the truth value of that antecedent, assigning input samples to child nodes based on the truth of that feature for each input. The tree construction process repeats until some stopping condition (e.g. max tree depth) is met.

Knowledge extracted is often represented in the form of logic programs, i.e. a collection of rules that map a set of conditions (antecedents) to conclusions (consequents). Typically, the rules in a logic program are of the form:

$$A_0 \wedge A_1 \wedge \dots \wedge A_n \wedge \neg A_{n+1}, \neg A_{n+2} \wedge \dots \wedge \neg A_m \rightarrow C$$

where A states that some condition A must be true, ¬A states that A must be false, each A / ¬A is an antecedent, C is the consequent, and all symbols A, ¬A and C are literals.

The symbol $\wedge$ is a logical-AND that joins all antecedents together such that the consequent C is only true if the precise combination of antecedents is satisfied.

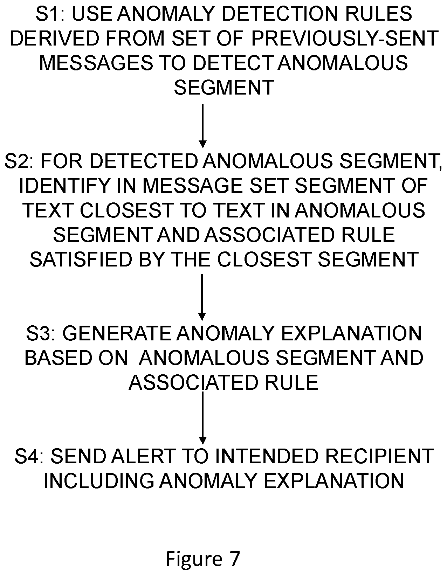

An embodiment of a computer-implemented method of flagging suspicious electronic messages will now be described. As shown in the flowchart of Figure 7, the method comprises (step S1) detecting an anomalous segment in natural language content of an electronic message purporting to be sent or written by a particular individual using anomaly detection rules derived from natural language message content of a set of electronic messages previously sent by the particular individual. The method further comprises, for a detected anomalous segment, identifying (step S2) a segment of text in an electronic message of the set which is closest to text in the anomalous segment, and an associated rule of the anomaly detection rules which is satisfied by the closest segment, and generating (step S3) a human-interpretable anomaly explanation based on the anomalous segment and the associated rule. An alert including the anomaly explanation is then sent (step S4) to the intended recipient of the electronic message to flag the electronic message as suspicious.

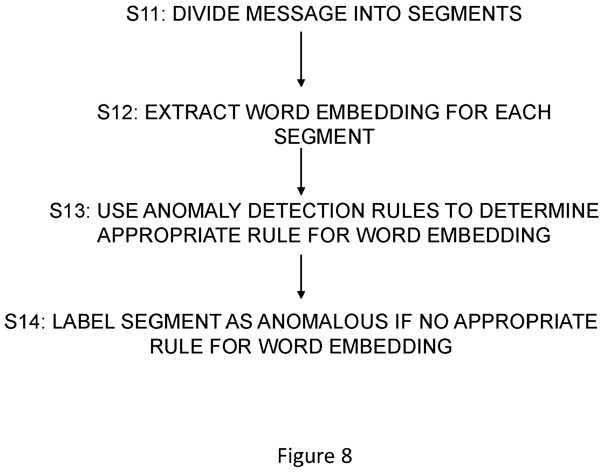

A process for detecting the anomalous segment is shown in Figure 8. At step S11 natural language content of the electronic message purporting to be sent or written by the particular individual is divided into segments containing at least one word. At step S12 a word embedding is extracted for each segment. At step S13, for each word embedding, the anomaly detection rules associated with the particular individual are used to determine if there is an appropriate rule for the word embedding. If there is no appropriate rule for a word embedding, at step S14 the segment corresponding to the word embedding is labelled as anomalous.

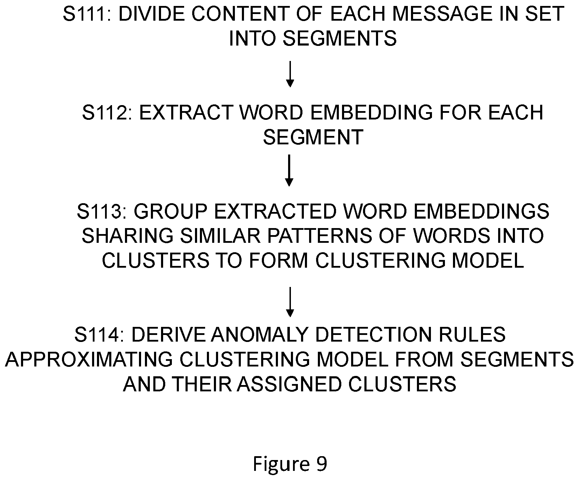

A process for deriving the anomaly detection rules is shown in Figure 9. In steps S111 to S113 a clustering model is created using natural language message content of the set of electronic messages previously sent by the particular individual. At step S111 natural language content of each electronic message of the set is divided into segments containing at least one word. At step S112 a word embedding is extracted for each segment. At step S113 the extracted word embeddings are grouped into clusters to form the clustering model, word embeddings sharing a similar pattern of words being assigned to the same cluster. At step S114 the anomaly detection rules are derived from the segments and their assigned clusters, the rules forming an interpretable approximation of the clustering model created for the particular individual.

The process to derive the anomaly detection rules may take the form of a computer program which, when run on a user's computer, causes the computer to create, in respect of a particular sender of electronic messages received at the computer, a clustering model using natural language message content of a set of electronic messages stored on the computer which have previously been received from the particular sender, wherein creating the clustering model comprises steps S111 to S114.

Generating a human-interpretable anomaly explanation may comprise modifying a copy of the associated rule using wording from the anomalous segment so that the anomalous segment satisfies the modified copy of the associated rule. For example, where each rule has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions, modifying a copy of the associated rule comprises negating each antecedent in the rule which is not satisfied by the anomalous segment, conjoining each negated antecedent with a literal from the anomalous segment which occupies the same position, and changing the consequent of the rule to indicate that the rule relates to an anomalous segment.

At least one additional rule-based electronic message classification method employed by the intended recipient, and/or used on or with the computer, may be updated on the basis of the anomaly explanation.

Embodiments may:

- Learn common writing behaviours of a user's contact when that contact is writing to that particular user.

  ○ Using natural language processing, word embedding, clustering and rule extraction.

- Do this entirely using mail from the contact stored locally on the user's machine so that there is no need for network communication or consumption of bandwidth, unless one or both of the following options are selected:

  ○ The solution is applied in addition to other detection methods which do communicate within a network.
  ○ The contact chooses to share additional mail they have written to others and/or a model they have trained on their own locally stored data.

- Detect when mail from the contact does not conform to the behaviours learned and marks these as 'anomalies'.
- Generate explanations of why these messages have been labelled anomalies by combining strings of words represented in the learned rules and words found in the anomaly.
- Present anomalies and their explanations to the user.

**Detailed Embodiment**

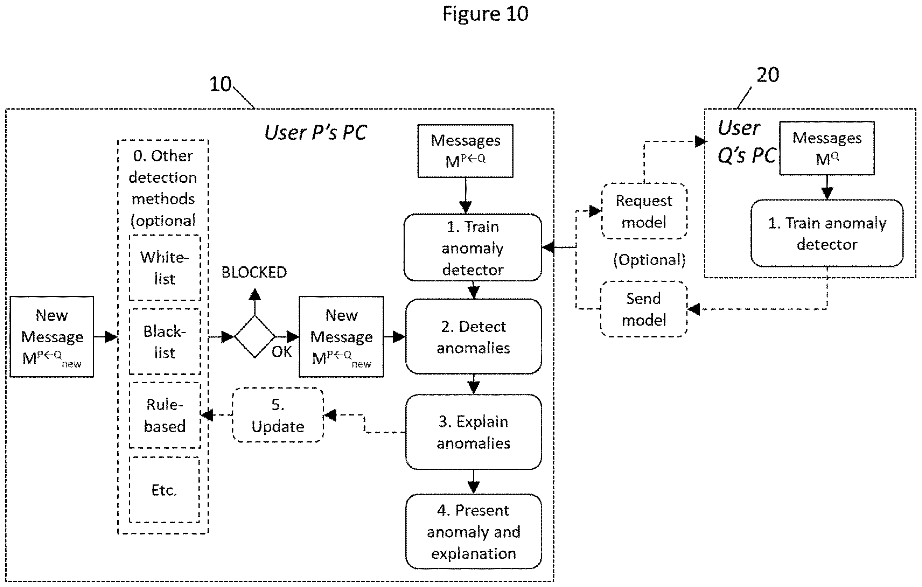

As shown in the high-level overview of Figure 10, the functionality of the embodiment may be broken down into the following main processes:

    0. Optional - Filter messages using existing detection methods
    1. Training the anomaly detector
    2. Detection of anomalies
    3. Explanation of anomalies
    4. Presentation.
    5. Optional - Update any rule-based methods used in step 0 by adding extracted rules (explanations).

Note that by referring to e-mail, mailbox etc. equivalents in other messaging systems (e.g. Facebook™ private messages, Skype™ conversations, etc.) are also meant.
Let P be the user of a mailbox on a personal computing device 10 and Q refer to one of the user's contacts having a personal computing device 20.

**0. Other detection methods (optional)**

Assume all e-mails referred to from here on have been approved by other detection methods, if used.

**1. Training the anomaly detector**

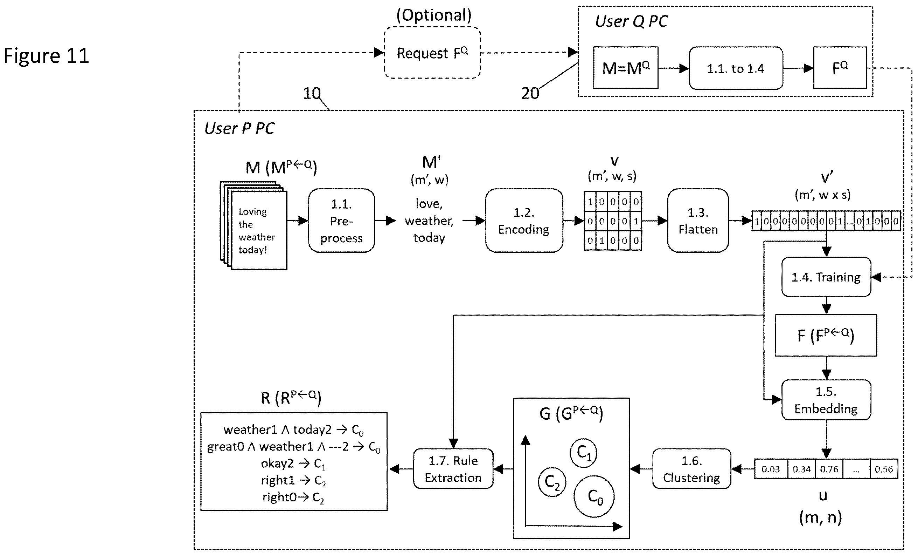

The following refers to Figure 11, which is a flowchart illustrating training of the anomaly detector:

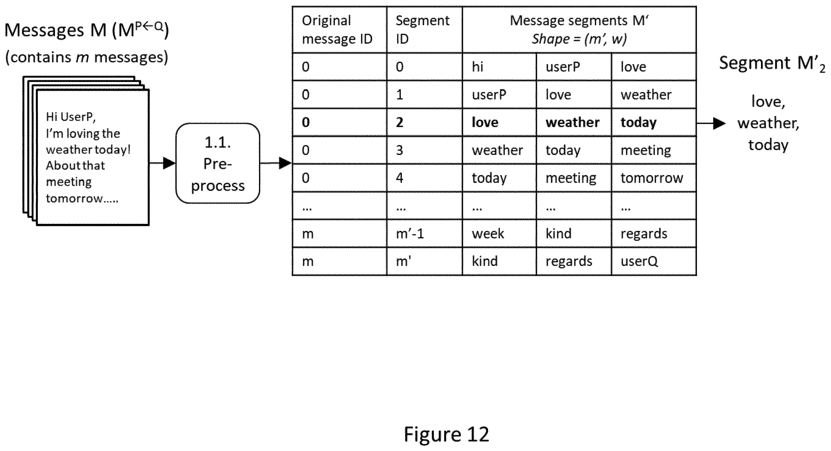

    1.1. All messages $M^{P \leftarrow Q}$ from Q to P are preprocessed to stem, lemmatise, remove stop words, etc. They are also broken into equal-length segments of $w$ words according to a sliding window approach, essentially treating each segment as a separate message, for example as shown in Figure 12.
    1.2. Each segment of the set $M'$ of message segments is encoded into a matrix v with word order preserved, for example in the manner shown in Figure 2.
    1.3. $v$ is flattened into a set of vectors $v'$, for example as shown in Figure 3.
    1.4. An autoencoder is then trained using the set of vectors $v'$, for example as shown in Figure 4, to obtain a classification model which is referred to hereafter as $F^{P \leftarrow Q}$.

From this point onwards, for simplicity, $M$ is used to refer to $M^{P \leftarrow Q}$, $F$ is used to refer to $F^{P \leftarrow Q}$, etc. In other words, from this point onwards all references to models, inputs and outputs refer to those pertaining to messages from Q to P ($P \leftarrow Q$).
1.5. The autoencoder model $F$ is used to extract word embeddings $u$ for each message segment of set $M'$ by taking the $n$ activations at the chosen extraction layer (presumably but not necessarily the middle-most layer) yielded by a forward pass of each message segment from $M'$ as shown in Figure 4.
1.6. Word embeddings u are grouped into a set of $g$ clusters by a conventional clustering algorithm $G(u) = \{C_0, C_1, ..., C_g\}$ to obtain a clustering model G. As a result, similar writing patterns will be grouped into the same clusters. Preferably, a clustering algorithm which automatically determines the number of clusters (e.g. DBSCAN) should be used. Encodings $v$ may be used instead of embeddings $u$, but at greater computational cost due to their greater size.
1.7. Finally, a rule extraction algorithm, for example such as that described in Figure 6, is used to learn a set of rules $R$ which forms an interpretable approximation of the behaviour of clustering model $G$. In other words, these rules describe the set of clusters. Each rule $R_r$ is defined as $R_r = \{A_r, C_r\}$, where $A_r$ is the 'body' of the rule (a set of antecedent conditions on the truth of input literals) and $C_r$ is the 'head' (a set of consequents that assign truth values to output literals if the body is satisfied by a queried input sample). In this case, consequents correspond to the ID of the cluster assigned to a message segment, and the antecedents correspond to word positions.
Optionally, a word embedding model $F^Q$ trained on all messages $M^Q$ written by Q (regardless of recipient) may be used as a point from which transfer learning of $F^{P \leftarrow Q}$ begins. Neural network-based word embedding models other than autoencoder models, for example *GOOGLE*™*'s* Word2Vec, may be applied. It is assumed that Q would have already provided consent for use of messages $M^Q$, but if necessary a consent checking step may be included in the process of Figure 10 and/or Figure 11. It is also assumed that Q has an instance of this embodiment installed on Q's workstation in order to learn $F^Q$. Q may alternatively share $M^Q$ with P so that $F^Q$ may be trained on P's workstation, but in the interest of privacy it is recommend that Q learns this locally.

**2. Detection of Anomalies**

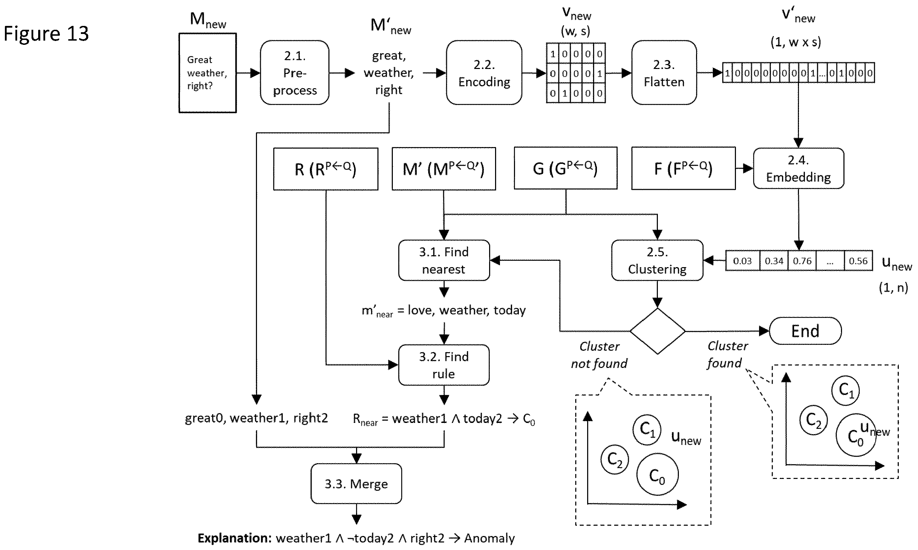

Once a set of rules R has been extracted on the basis of the past messages $M^{P \leftarrow Q}$, the rules may be used to detect anomalies in a new message M$_{new}$. The anomaly detection process is illustrated in Figure 13:

2.1. The new message $M_{new}$ is pre-processed and broken into segments, as described above in item 1.1, to obtain a set $M'_{new}$ of message segments.

2.2. As described above in item 1.2, each segment of the set $M'_{new}$ of message segments is encoded into a matrix $v_{new}$ with word order preserved.

2.3. As described above in item 1.3, $v_{new}$ is flattened into a set of vectors $v'_{new}$. If the message breaks down into multiple segments, then steps 2.2. onwards are repeated for each segment.

2.4. An embedding $u_{new}$ for each segment of set $M'_{new}$ is obtained using the model $F$ trained in step 1.4 above.

2.5. Clustering model G obtained in item 1.6 is queried with regards to the appropriate cluster for $u_{new}$ (and therefore also the segment of $M'_{new}$). If $u_{new}$ fits into a cluster, then the segment of $M'_{new}$ is regarded as a legitimate string of text. Otherwise, the segment is labelled as an anomaly, for which an explanation is required.

### 3. Explanation of Anomalies

The process for deriving an explanation of anomalies is also illustrated in Figure 13:

3.1. The segment from the training set $M'$ which is closest to the anomalous message segment is identified as the $u$ for which $dist(u, u_{new})$ is minimum, where $dist(a,b)$ is any distance metric, such as cosine or Euclidean distance. This closest segment will be referred to as $m'_{near}$.

3.2. The rule responsible for assigning $m'_{near}$ to its cluster is then identified. This rule is referred to as $R_{near}$.

3.3. The anomalous message segment and closest rule are 'merged' to form an explanation (see example later in Table 5). In other words, a copy of the rule is modified so that the anomalous message segment satisfies it, in the following way:

3.3.1. Antecedents in the rule which are satisfied by the anomaly remain the same.

3.3.2. Each antecedent which is not satisfied is negated and conjoined with the literal from the anomaly which occupies the same position.

3.3.3. The consequent of the rule is changed to 'Anomaly'.

### 4. Presentation

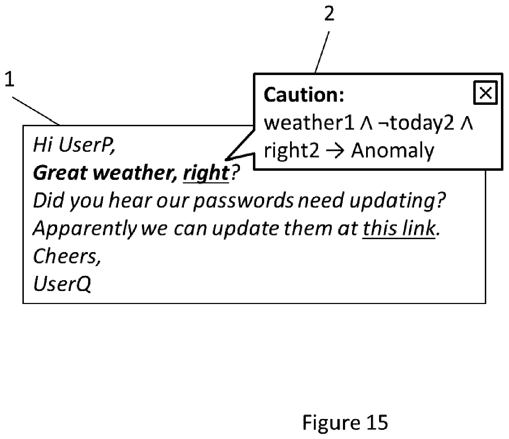

When the original email is presented to the user, suspicious segments of text may be formatted so as to alert the user of the concern, hopefully encouraging the user to think twice before responding in any way (for example by clicking on a link, replying with bank details, etc.). An example is shown later in Figure 15.

How the user responds would be up to them at this point. They may choose to ignore the warning, or verify with their contact whether or not the mail was truly from them.

### 5. Update other rule-based detection methods (optional)

If an anomaly is found, its explanation may be added to a list of detection rules in any other rule-based method the user may use, so such irregularities are caught earlier in the pipeline.

### Worked Example

A worked example will now be explained, in which users P and Q exchange e-mails on a regular basis.

Assume Q has a reputation for opening with a comment on the weather in a very specific way:

*"I'm loving the weather today!" or "Awful weather today!"*

And also ending sentences with "okay?" when he wants to elicit an agreement or understanding:

*"Check with me first, okay?"*

However, he always uses "okay?" and has never been known to end a sentence with, e.g., "right?"

Assume that an attacker pretending to be Q has picked up on the first mannerism but not the second and sends P the following e-mail:

*Hi UserP,*
*Great weather, right?*

*Did you hear our passwords need updating? Apparently we may update them at this link.*

*Cheers,*
*UserQ*

This example will demonstrate how the segment "Great weather, right?" will be flagged as an anomaly, since user Q never ends a sentence with 'right?'.

## 0. Other detection methods (optional)

Assume that user P uses other detection methods and that all e-mails referred to hereon have been approved by these methods.

## 1. Training the anomaly detector

*P has decided to train an anomaly detector for e-mail exchanges with Q, using the corpus of 13 words defined in Table 1 below, along with the example 2D encoding (step 1.2.) for the segment "loving the weather today", pre-processed into "love, weather, today" (the symbol --- defines words not found in the corpus).* The model may take segments of up to 3 words, resulting in one-hot encodings of length $w * s = 3 * 13 = 39$ word positions. Each word position will take the role of a literal in the extracted logic program.

Table 1

| 0 | 1 | 2 | 3 | 4 | 5 | 6 | 7 | 8 | 9 | 10 | 11 | 12 |
|---|---|---|---|---|---|---|---|---|---|----|----|----|
| --- | agree | awful | check | contract | first | great | love | okay | please | right | today | weather |
| 0 | 0 | 0 | 0 | 0 | 0 | 0 | 1 | 0 | 0 | 0 | 0 | 0 |
| 0 | 0 | 0 | 0 | 0 | 0 | 0 | 0 | 0 | 0 | 0 | 0 | 1 |
| 0 | 0 | 0 | 0 | 0 | 0 | 0 | 0 | 0 | 0 | 0 | 1 | 0 |

Table 2 below shows 8 example segments that P uses as training data which are taken from P's history of e-mails received from Q, along with associated encodings, embeddings and assigned clusters.

Table 2

| Part of message | Segment word positions | Flattened word encoding v' | | | | | | | Word embedding u | cluster |
|---|---|---|---|---|---|---|---|---|---|---|
| | | -0 | agree 0 | awful 0 | ... | right 2 | today 2 | weather2 | | |
| I'm loving the weather today | love0, weather1 , today2 | 0 | 0 | 0 | ... | 0 | 1 | 0 | [0.12, 0,65, ..., 0.78] | 0 |
| Awful weather today! | awful0, weather1 , today2 | 0 | 0 | 1 | ... | 0 | 1 | 0 | [0.13, 0,65, ..., 0.78] | 0 |
| Check with me first, okay? | check0, first1, okay2 | 0 | 0 | 0 | ... | 0 | 0 | 0 | [0.92, 0.19, .... 0.93] | 1 |
| This contract is awful | contract0 , awful1 | 0 | 0 | 0 | ... | 0 | 0 | 0 | [0.35, 0.81, ... , 0.45] | 2 |
| It's great weather here | great0, weather1 , ---2 | 0 | 0 | 0 | ... | 0 | 0 | 0 | [0.17, 0,68, 0.65] | 0 |
| Please send the contract right now | contract0 right1, -- -2 | 0 | 0 | 0 | ... | 0 | 0 | 0 | [0.56, 0.23, ..., 0.65] | 2 |

(continued)

| Part of message | Segment word positions | Flattened word encoding v' | | | | | | | Word embedding u | cluster |
|---|---|---|---|---|---|---|---|---|---|---|
| | | -0 | agree 0 | awful 0 | ... | right 2 | today 2 | weathe r2 | | |
| Send it straight over, okay? | send0,-1, okay2 | 0 | 0 | 0 | ... | 0 | 0 | 0 | [0.82, 0.13, .... 0.89] | 1 |
| We don't need to agree right now | agree0, right1,-2 | 0 | 1 | 0 | ... | 0 | 0 | 0 | [0.32, 0.87, ..., 0.11] | 2 |

Referring to Table 2:

1.1. The training messages are pre-processed by removing stop words and stemming. Messages are also broken up into segments of length $w$ = 3.

1.2. Each segment is encoded into a 3 * 13 matrix (e.g. Table 1), and then each matrix is stored in a tensor $v$ of 8 encodings such that v has shape $[m', w, s]$ = [8,3,13].

1.3. Individual encodings are flattened to obtain $v'$ of shape $[m', w * s]$ = [8, 3 * 13] = [8,39] (e.g. as shown in Table 2).

1.4. An autoencoder with 10 hidden neurons ($n$ = 10) is then trained to reproduce the encodings.

1.5. Word embeddings are extracted from the hidden layer for all 8 segments, yielding a matrix $u$ of shape $[m', n]$ = [8,10] (second-to-last column in Table 2).

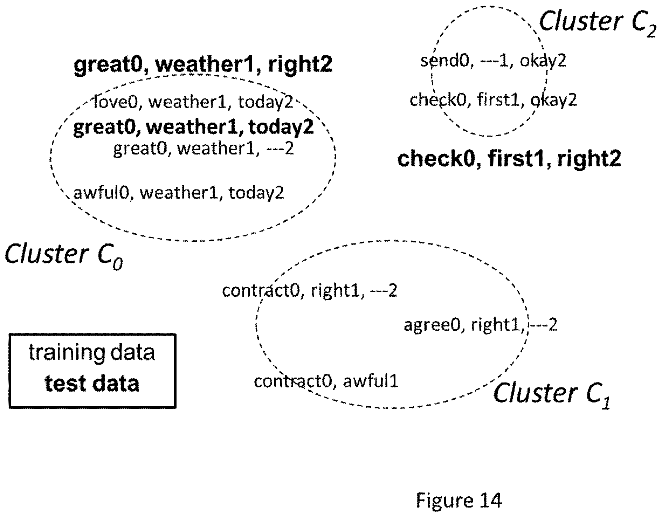

1.6. The DBSCAN clustering algorithm is trained on the word embeddings and sorts them into 3 clusters, allocated as shown in Figure 14 and in the last column of Table 2.

1.7. The rule extraction algorithm is applied to the flattened word encodings and their assigned clusters to yield the 5 rules listed in Table 3 below. These rules and clusters define the user's mannerisms. Cluster 0 corresponds to Q's tendency to comment on the weather, cluster 1 to Q's tendency to end sentences with 'okay' and cluster 2 to any other speech patterns detected in the training data. Anything that does not satisfy a rule is regarded as an anomaly.

Table 3

| $R_0$: | weather1 $\wedge$ today2 $\rightarrow C_0$ |
|---|---|
| $R_1$: | great0 $\wedge$ weather1 $\wedge$ ---2 $\rightarrow C_0$ |
| $R_2$: | okay2 $\rightarrow C_1$ |
| $R_3$: | right1 $\rightarrow C_2$ |
| $R_4$: | right0 $\rightarrow C_2$ |

## 2. Detection

Table 4 below presents segments of text from three messages sent after training finishes. These are all approved by other detection methods (step 0.) The first is a legitimate message from user Q, whereas the following two are from an attacker posing as Q, where it is assumed that the attacker has picked up on the first mannerism (Cluster 0) but not the second (Cluster 1).

Table 4

| Sender | Message | Processed | Rule satisfied | Cluster |
|---|---|---|---|---|
| Q | "Great weather today" | great0, weather1 , today2 | $R_0$ | $C_0$ |
| Attacker | "Great weather, right?" | great0, weather1 , right2 | None (anomaly) | |
| Attacker | "Check with me first, right?" | check0, first1, right2 | None (anomaly) | |

2.1. - 2.4. For each new segment, embeddings are produced in the same way as in the training data.

2.5. The clustering model is consulted for each new segment. As shown in Table 4 and Figure 14, the first message is assigned to cluster 0 but no cluster is identified for the other two, which are therefore marked as anomalous.

The messages from the attacker do not satisfy any of the rules. For example, note that 'right2' never appears in any rules in Table 3. In Figure 14, the anomalous nature of the messages is represented by the fact that they are not positioned within any of the three clusters.

### 3. Explanation

The explanation is a description of why the anomaly does not satisfy the same rule as the nearest non-anomalous sample from the training set, and is constructed from the nearest acceptable text segment and the rule it satisfies, as shown in Table 5 below:

Table 5

| Step | | | Example 1 | Example 2 |
|---|---|---|---|---|
| 2.5. | Identify anomalous message | | great0, weather1, right2 | check0, first1 , right2 |
| 3.1. | Nearest training message | | love0, weather1, today2 | check0, first1, okay2 |
| 3.2. | Rule satisfied | | weather1 $\wedge$ today2 $\rightarrow$ $C_0$ | okay2 $\rightarrow$ $C_1$ |
| 3.3.1 | Antecedents satisfied by the anomaly **(weather1)** remain the same. | | **weather1** $\wedge$ today2 $\rightarrow$ $C_0$ | okay2 $\rightarrow$ C, |
| 3.3.2. | Antecedents not satisfied by the anomaly **(today2 / okay2)** have their truth values negated | | weather1 $\wedge$ **¬today2** $\rightarrow$ $C_0$ | **¬okay2** $\rightarrow$ $C_1$ |
| | Negated antecedents are then conjoined with literals from the anomaly **(right2)** that occupy the same position. | | weather1 $\wedge$ ¬today2 $\wedge$ **right2** $\rightarrow$ $C_0$ | ¬okay2 $\wedge$ **right2** $\rightarrow$ $C_1$ |
| 3.3.3. | The consequent is changed to say **'Anomaly'** | | weather1 $\wedge$ ¬today2 $\wedge$ right2 $\rightarrow$ **Anomaly** | ¬okay2 $\wedge$ right2 $\rightarrow$ **Anomaly** |

The anomalous message is combined with the rule satisfied by the closest training message in order to generate the explanation. Continuing the above example, the explanation is:

$$weather1 \wedge \neg today2 \wedge right2 \rightarrow Anomaly.$$

In natural language, this explanation may be interpreted by a user as:
"When talking about the weather, user Q normally ends with 'today', but instead ends with 'right', so this is suspicious."

### 4. Presentation

As shown in Figure 15, one way to present the anomaly and its explanation would be to format the original email 1 to highlight the anomalous segment (e.g. with bold text) with further formatting applied to responsible words (e.g. underlined), where a responsible word is regarded as one which was swapped in in place of part of the classification rule (step 3.3.2.). A separate alert 2 may also be displayed to present the explanation in rule form.

### 5. Update other rule-based detectors

The explanation is analyzed by user P, who decides to share the alert with user Q. On agreeing that the behaviour is suspicious, P updates a rule-based classifier applied in step 0 to include the rule "weather1 $\wedge$ ¬today2 $\wedge$ right2 $\rightarrow$ Anomaly" as a new indicator of compromise. Alternatively, such updating of the rule-based classifier may be carried out automatically. Other instances of this same pattern will now be detected earlier in the pipeline.

**Apparatus**

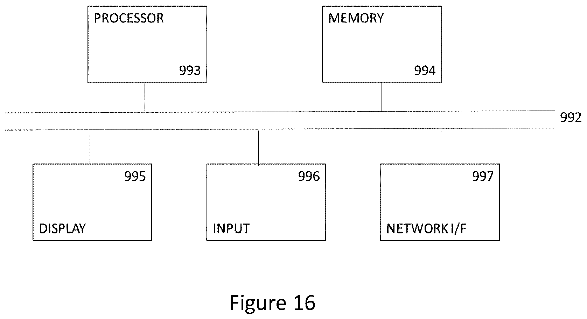

Figure 16 is a block diagram of a computing device, such as a data storage server, which embodies the present invention, and which may be used to implement some or all of the operations of a method embodying the present invention, and perform some or all of the tasks of apparatus of an embodiment. For example, the computing device of Figure 16 may be used to perform all the operations of the method shown in Figure 7 and/or Figure 10, or only to implement one or more of the processes of Figure 8, 9, 11, 12 and/or 13.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The computing device of Figure 16 may embody information processing apparatus configured to flag anomalies in a portion of natural language text. Memory 994 is configured to store a clustering model derived from a training set of natural language text data and instructions to be carried out by the processor 993. For example, the instructions may cause processor 993 to: obtain a word embedding for a segment of the natural language text portion and determine whether the word embedding fits into any cluster in the clustering model; if the word embedding is determined not to fit into any cluster in the clustering model, cause the segment to be labelled as an anomaly, identify a segment of text data in the training set which is closest to text in the anomaly, and a rule responsible for assigning the closest segment to a cluster in the clustering model, and generate a human-interpretable anomaly explanation based on the text of the anomaly and the responsible rule. The instructions may also cause the processor 993 to issue an alert flagging an anomaly in the portion of natural language text, the alert including the anomaly explanation.

The instructions may cause the processor 993 to: create the clustering model using the training set of natural language text data by dividing natural language content of items of text data in the set into segments containing at least one word, extracting a word embedding for each segment, and grouping the extracted word embeddings into clusters, where word embeddings sharing a similar pattern of words are assigned to the same cluster; and derive rules from the segments and their assigned clusters, the rules forming an interpretable approximation of the clustering model.

The instructions may cause the processor 993 to generate a human-interpretable anomaly explanation by modifying a copy of the responsible rule using text from the anomaly so that the anomaly satisfies the modified copy of the associated rule. For example, where each rule of the clustering model has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions, modifying a copy of the responsible rule comprises negating each antecedent in the rule which is not satisfied by the text of the anomaly, conjoining each negated antecedent with a literal from the text of the anomaly which occupies the same position, and changing the consequent of the rule to indicate that the rule relates to an anomaly.

More generally, the memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for performing all the operations of the method shown in Figure 7 and/or Figure 10, or only to implement one or more of the processes of Figures 8, 9, 11, 12 and/or 13. Such instructions may be executed by one or more processors 993. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 7 and/or 10 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 16. Such a computing device need not have every component illustrated in Figure 16, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Brief Description of Technical Terms Used in this Application

**Antecedent:** A literal which acts as condition in a rule.

**Autoencoder:** A neural network which learns feature vectors by learning to deconstruct and reconstruct its own inputs. In other words, the output of the network is a copy of the input.

**Baseline:** A model of normal activity or behaviour against which other activities or behaviours may be compared to detect for anomalies.

**Clustering:** A process in which entities (usually represented as feature vectors) are assigned into various groups (clusters) based on the values of their features such that similar entities are assigned to the same group (cluster).

**Consequent:** A literal which a rule assigns a truth value of 1 if that rule is satisfied.

**DBSCAN:** A particular clustering method which automatically assigns the number of clusters.

**Feature vector:** A vector of numbers (usually but not necessarily real numbers) that represent an individual entity such that each element corresponds to a different feature of that entity.

**IDS - Intrusion Detection System:** A device or software application that monitors for potentially malicious activity within a network or other computer system.

**IoC - indicator of Compromise:** Some artefact observed within a computer system or network that reveals or strongly suggests a successful intrusion on that system or network.

**Lemmatisation:** The process of mapping a word to its *lemma,* where the lemma is the base, non-inflicted form of a word (e.g. 'walk' rather than 'walked', 'walking', 'walks'; 'good' rather than 'better', etc.).

**Literal:** A symbol used in a rule (either an antecedent or a consequent).

**NLP - Natural Language Processing:** A subfield of computer science and artificial intelligence concerned with understanding, generating and manipulating human language.

**Segment:** A fixed-length part of a message.

**Stemming:** Similar to lemmatisation except that it is context independent and works by removing characters rather than by mapping words (i.e. stemming may generate 'walk' from 'walking' but not 'good' from 'better').

**Stop word:** A word which is filtered out before further stages of *natural language processing.* Any word may be a stop word, but these are usually very common, domain-agnostic words such as 'the', 'it', 'on', etc. The chosen set of stop words may differ depending on the implementation.

**Transfer Learning:** The training of a neural network (or other learning model) on one task, having already been trained on a similar task. This usually means that the former task may be learned with a smaller dataset than would otherwise be required.

**UEBA - User Entity Behaviour Analytics:** A term coined by Gartner in 2015 to describe the automated detection of anomalous behaviour of an individual person or entity (such as network node, software instance, etc.) based on a model of that person or entity's normal behaviour (i.e. their *baseline*).

**Word embedding:** The translation of a piece of text into *feature vectors.* Thus, with respect to *natural language processing,* the terms 'word *embedding'* and *'feature vector'* are synonymous.

**Word position:** A word token combined with a number indicating its position in a **segment.** These form the antecedents in extracted rules.

**Word2Vec:** A model of machine learning for *NLP* in which the *word embedding* of a given word is learned as a model of the context in which that word is used, where context is taken to be the immediately surrounding words.

**Symbols used:**

| | |
|---|---|
| A | An antecedent in a rule |
| $A_r$ | A set of antecedents $A_r$ |
| C | A cluster or consequent in a rule (synonymous in this invention, since rules assign segments to cluster IDs. |
| $C_r$ | A set of consequents $C_r$ |
| F | An autoencoder trained to model a user's writing style |
| G | A clustering model to assign a segment to a cluster. |
| c | The total number of clusters |
| M | Original set of messages |
| m | Number of messages |
| M' | Set of message segments |
| m' | Number of message segments |
| n | Number of units in extraction layer of autoencoder |
| R | Extracted rules |
| $R_r$ | A set of rules R |
| s | Corpus size |
| u | Word embeddings |
| v | Word encodings |
| v' | Flattened word encodings |
| w | Window / segment length |

**Claims**

1. A computer-implemented method of flagging suspicious electronic messages, the method comprising:

> detecting an anomalous segment in natural language content of an electronic message purporting to be sent or written by a particular individual, the detection using anomaly detection rules derived from natural language message content of a set of electronic messages previously sent by the particular individual;
> for the anomalous segment detected, identifying a segment of text in an electronic message of the set which is closest to text in the anomalous segment, and an associated anomaly detection rule of the anomaly detection rules which is satisfied by the closest segment, and generating a human-interpretable anomaly explanation constructed from the anomalous segment and the associated anomaly detection rule, where the anomaly explanation is a description of why the anomalous segment does not satisfy the same anomaly detection rule as the closest segment; and
> sending to an intended recipient of the electronic message an alert including the anomaly explanation to flag the electronic message as suspicious.

2. A method as claimed in claim 1, wherein detecting the anomalous segment comprises:

dividing natural language content of the electronic message purporting to be sent or written by the particular individual into first segments containing at least one word,

extracting a word embedding for each first segment,

for each word embedding, using the anomaly detection rules associated with the particular individual to determine whether there is an appropriate rule for the word embedding, and

when there is no appropriate rule for a word embedding, labelling the first segment corresponding to the word embedding as anomalous.

3. A method as claimed in claim 1 or 2, further comprising deriving the anomaly detection rules by:

creating, in respect of the particular individual, a clustering model using natural language message content of the set of electronic messages previously sent by the particular individual, wherein creating the clustering model comprises:

dividing natural language content of each electronic message of the set into second segments containing at least one word,

extracting a word embedding for each second segment, and

grouping the extracted word embeddings into clusters, where word embeddings sharing a similar pattern of words are assigned to the same cluster; and

deriving the anomaly detection rules from the second segments and their assigned clusters, the rules forming an interpretable approximation of the clustering model created for the particular individual.

4. A method as claimed in claim 1, 2 or 3, wherein generating a human-interpretable anomaly explanation comprises: modifying a copy of the associated rule using wording from the anomalous segment so that the anomalous segment satisfies the modified copy of the associated rule.

5. A method as claimed in claim 4, wherein:

each rule has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions; and

modifying a copy of the associated rule comprises negating each antecedent in the rule which is not satisfied by the anomalous segment, conjoining each negated antecedent with a literal from the anomalous segment which occupies the same position, and changing the consequent of the rule to indicate that the rule relates to an anomalous segment.

6. A method as claimed in any of claims 1 to 5, further comprising causing at least one additional rule-based electronic message classification method employed by the intended recipient to be updated on the basis of the anomaly explanation.

7. Information processing apparatus (10) to flag anomalies in a portion of natural language text of an electronic message purporting to be sent or written by a particular individual, the apparatus comprising:

a processor (993); and

a memory storing a clustering model (994) and anomaly detection rules for assigning text to clusters in the clustering model, the clustering model and

anomaly detection rules being derived from a training set of natural language text data derived from a set of electronic messages previously sent by the particular individual, and instructions to cause the processor (993) to:

obtain a word embedding for a segment of the natural language text portion;

determine whether the word embedding fits into any cluster in the clustering model, and, when the word embedding is determined not to fit into any cluster in the clustering model, label the segment as an anomalous segment;

identify a segment of text data in the training set which is closest to text in the anomalous segment, and an associated anomaly detection rule of the anomaly detection rules which is responsible for assigning the closest segment to a cluster in the clustering model, and generate a human-interpretable anomaly explanation constructed from the text of the anomalous segment and the associated anomaly detection rule,

where the anomaly explanation is a description of why the anomalous segment does not satisfy the same anomaly detection rule as the closest segment; and

issue to an intended recipient of the electronic message an alert flagging an anomaly in the portion of natural language text, the alert including the anomaly explanation.

8. Apparatus as claimed in claim 7, wherein the instructions also cause the processor (993) to:

create the clustering model using the training set of natural language text data by:

dividing natural language content of items of text data in the set into segments containing at least one word, extracting a word embedding for each segment, and
grouping the extracted word embeddings into clusters, where word embeddings sharing a similar pattern of words are assigned to the same cluster; and

derive the anomaly detection rules from the segments and their assigned clusters, the rules forming an interpretable approximation of the clustering model.

9. Apparatus as claimed in claim 7 or 8, wherein generating a human-interpretable anomaly explanation comprises: modifying a copy of the responsible rule using text from the anomalous segment so that the anomalous segment satisfies the modified copy of the responsible rule.

10. Apparatus as claimed in claim 9, wherein:

each rule of the clustering model has the form $\{A_r, C_r\}$, where $A_r$ is a set of antecedent conditions and $C_r$ is a set of consequents that are true if the antecedent conditions are satisfied by a queried input sample, each consequent corresponding to an ID of a cluster assigned to a segment and each antecedent corresponding to word positions; and
modifying a copy of the responsible rule comprises negating each antecedent in the rule which is not satisfied by the text of the anomalous segment, conjoining each negated antecedent with a literal from the text of the anomalous segment which occupies the same position, and changing the consequent of the rule to indicate that the rule relates to an anomalous segment.

11. Apparatus as claimed in any one of claims 7 to 10, wherein the instructions also cause the processor (993) to cause at least one additional rule-based electronic message classification method stored in the memory (994) to be updated on the basis of the anomaly explanation.

**Patentansprüche**

1. Computerimplementiertes Verfahren zum Markieren verdächtiger elektronischer Nachrichten, wobei das Verfahren umfasst:

Erkennen eines anomalen Segments im natürlichsprachlichen Inhalt einer elektronischen Nachricht, die vorgibt, von einer bestimmten Person gesendet oder geschrieben worden zu sein, wobei die Erkennung Anomalieerkennungsregeln verwendet, die aus dem natürlichsprachlichen Nachrichteninhalt eines Satzes von elektronischen Nachrichten abgeleitet sind, die zuvor von der bestimmten Person gesendet wurden;
für das erkannte anomale Segment, Identifizieren eines Textsegments in einer elektronischen Nachricht des Satzes, das dem Text in dem anomalen Segment am nächsten kommt, und einer zugehörigen Anomalieerkennungsregel der Anomalieerkennungsregeln, die von dem am nächsten liegenden Segment erfüllt wird, und
Erzeugen einer von Menschen interpretierbaren Anomalienerläuterung, die aus dem anomalen Segment und der zugehörigen Anomalieerkennungsregel konstruiert wird, wobei die Anomalienerläuterung eine Beschreibung ist, warum das anomale Segment nicht dieselbe Anomalieerkennungsregel erfüllt wie das am nächsten liegende Segment; und
Senden einer Warnung an einen beabsichtigten Empfänger der elektronischen Nachricht, die die Erklärung der Anomalie beinhaltet, um die elektronische Nachricht als verdächtig zu markieren.

2. Verfahren nach Anspruch 1, wobei das Erkennen des anomalen Segments Folgendes umfasst:

Unterteilen des natürlichsprachlichen Inhalts der elektronischen Nachricht, die vorgibt, von der betreffenden Person gesendet oder geschrieben worden zu sein, in erste Segmente, die mindestens ein Wort enthalten,
Extrahieren einer Worteinbettung für jedes erste Segment,
für jede Worteinbettung, Verwenden der Anomalieerkennungsregeln, die mit der bestimmten Person verbunden sind, um zu bestimmen, ob es eine geeignete Regel für die Worteinbettung gibt, und
wenn es keine passende Regel für eine Worteinbettung gibt, Kennzeichnen des ersten Segments, das der Worteinbettung entspricht, als anomal.

3. Verfahren nach Anspruch 1 oder 2, ferner umfassend die Ableitung der Anomalieerkennungsregeln durch:
Erstellen eines Clustermodells in Bezug auf die bestimmte Person unter Verwendung des natürlichsprachlichen Nachrichteninhalts des Satzes elektronischer Nachrichten, die zuvor von der bestimmten Person gesendet wurden, wobei das Erstellen des Clustermodells Folgendes umfasst:

Unterteilen des natürlichsprachlichen Inhalts jeder elektronischen Nachricht des Satzes in zweite Segmente, die mindestens ein Wort enthalten,
Extrahieren einer Worteinbettung für jedes zweite Segment, und Gruppieren der extrahierten Worteinbettungen in Cluster, wobei Worteinbettungen mit einem ähnlichen Wortmuster demselben Cluster zugeordnet werden; und
Ableiten der Anomalieerkennungsregeln aus den zweiten Segmenten und ihren zugewiesenen Clustern, wobei die Regeln eine interpretierbare Annäherung an das für die bestimmte Person erstellte Clustermodell bilden.

4. Verfahren nach Anspruch 1, 2 oder 3, wobei das Erzeugen einer für Menschen interpretierbaren Anomalieerklärung Folgendes umfasst:
Modifizieren einer Kopie der zugehörigen Regel unter Verwendung des Wortlauts aus dem anomalen Segment, sodass das anomale Segment die modifizierte Kopie der zugehörigen Regel erfüllt.

5. Verfahren nach Anspruch 4, wobei:

jede Regel die Form $\{A_r, C_r\}$ aufweist, wobei $A_r$ ein Satz von Vorbedingungen und $C_r$ ein Satz von Folgerungen ist, die wahr sind, wenn die Vorbedingungen von einer abgefragten Eingabeprobe erfüllt werden, wobei jede Folgerung einer ID eines einem Segment zugeordneten Clusters entspricht und jede Vorbedingung Wortpositionen entspricht; und
Modifizieren einer Kopie der zugehörigen Regel das Negieren jedes Antezedens in der Regel umfasst, das von dem anomalen Segment nicht erfüllt wird, Verbinden jedes negierten Antezedens mit einem Literal aus dem anomalen Segment, das dieselbe Position einnimmt, und Ändern der Konsequenz der Regel, um anzugeben, dass sich die Regel auf ein anomales Segment bezieht.

6. Verfahren nach einem der Ansprüche 1 bis 5, ferner umfassend das Veranlassen, dass mindestens ein zusätzliches regelbasiertes elektronisches Nachrichtenklassifizierungsverfahren, das von dem vorgesehenen Empfänger verwendet wird, basierend auf der Erklärung der Anomalie aktualisiert wird.

7. Informationsverarbeitungsgerät (10) zum Markieren von Anomalien in einem Abschnitt eines natürlichsprachlichen Textes einer elektronischen Nachricht, die vorgibt, von einer bestimmten Person gesendet oder geschrieben zu sein, wobei das Gerät Folgendes umfasst:

einen Prozessor (993); und
einen Speicher, der ein Clustermodell (994) und Anomalieerkennungsregeln zum Zuordnen von Text zu Clustern in dem Clustermodell speichert, wobei das Clustermodell und die Anomalieerkennungsregeln von einem Trainingssatz von Textdaten in natürlicher Sprache abgeleitet sind, die von einem Satz elektronischer Nachrichten abgeleitet sind, die zuvor von der bestimmten Person gesendet wurden, und Anweisungen, um den Prozessor (993) zu Folgendem zu veranlassen:

Erhalten einer Worteinbettung für ein Segment des natürlichsprachlichen Textabschnitts;
Bestimmen, ob die Worteinbettung in ein beliebiges Cluster in dem Clustermodell passt, und, wenn bestimmt wird, dass die Worteinbettung in kein Cluster in dem Clustermodell passt, Kennzeichnen des Segments als ein anomales Segment;
Identifizieren eines Textdatensegments in dem Trainingssatz, das dem Text in dem anomalen Segment am nächsten kommt, und einer zugehörigen Regel zur Anomalieerkennung der Regeln zur Anomalieerkennung, die dafür verantwortlich ist, das am nächsten liegende Segment einem Cluster in dem Clustermodell zuzuordnen, und Erzeugen einer von Menschen interpretierbaren Anomalieerklärung, die aus dem Text des anomalen Segments und der zugehörigen Regel zur Anomalieerkennung aufgebaut ist, wobei die Anomalieerklärung eine Beschreibung ist, warum das anomale Segment nicht dieselbe Regel zur Anomalieerkennung erfüllt wie das nächstgelegene Segment; und
Ausgeben einer Warnung an einen beabsichtigten Empfänger der elektronischen Nachricht, die eine Anomalie in dem Abschnitt des natürlichsprachlichen Textes kennzeichnet, wobei die Warnung die Anomalieerklärung beinhaltet.

**8.** Gerät nach Anspruch 7, wobei die Anweisungen den Prozessor (993) ebenfalls zu Folgendem veranlassen:
Erstellen des Clustermodells unter Verwendung des Trainingssatzes von Textdaten in natürlicher Sprache durch:

Unterteilen des natürlichsprachlichen Inhalts der Textdaten in dem Satz in Segmente, die mindestens ein Wort enthalten,
Extrahieren einer Worteinbettung für jedes Segment, und
Gruppieren der extrahierten Worteinbettungen in Cluster, wobei Worteinbettungen mit einem ähnlichen Wortmuster demselben Cluster zugeordnet werden; und
Ableiten der Anomalieerkennungsregeln aus den Segmenten und ihren zugewiesenen Clustern, wobei die Regeln eine interpretierbare Annäherung an das Clustermodell bilden.

**9.** Gerät nach Anspruch 7 oder 8, wobei das Erzeugen einer für Menschen interpretierbaren Anomalieerklärung Folgendes umfasst:
Modifizieren einer Kopie der zuständigen Regel unter Verwendung des Textes aus dem anomalen Segment, sodass das anomale Segment die modifizierte Kopie der zuständigen Regel erfüllt.

**10.** Gerät nach Anspruch 9, wobei:

jede Regel die Form $\{A_r, C_r\}$ aufweist, wobei $A_r$ ein Satz von Vorbedingungen und $C_r$ ein Satz von Folgerungen ist, die wahr sind, wenn die Vorbedingungen von einer abgefragten Eingabeprobe erfüllt werden, wobei jede Folgerung einer ID eines einem Segment zugeordneten Clusters entspricht und jede Vorbedingung Wortpositionen entspricht; und
Modifizieren einer Kopie der verantwortlichen Regel das Negieren jedes Antezedens in der Regel umfasst, das von dem Text des anomalen Segments nicht erfüllt wird, Verbinden jedes negierten Antezedens mit einem Literal aus dem Text des anomalen Segments, das dieselbe Position einnimmt, und Ändern der Konsequenz der Regel, um anzugeben, dass sich die Regel auf ein anomales Segment bezieht.

**11.** Gerät nach einem der Ansprüche 7 bis 10, wobei die Anweisungen den Prozessor (993) ebenfalls veranlassen, mindestens ein zusätzliches regelbasiertes elektronisches Nachrichtenklassifizierungsverfahren, das im Speicher (994) gespeichert ist, basierend auf der Anomalieerklärung zu aktualisieren.

## Revendications

**1.** Procédé mis en oeuvre par ordinateur pour signaler des messages électroniques suspects, le procédé comprenant :

la détection d'un segment anormal dans le contenu en langage naturel d'un message électronique censé être envoyé ou écrit par un individu particulier, la détection utilisant des règles de détection d'anomalie dérivées du contenu de message en langage naturel d'un ensemble de messages électroniques précédemment envoyés par l'individu particulier ;
pour le segment anormal détecté, l'identification d'un segment de texte dans un message électronique de l'ensemble qui est le plus proche du texte dans le segment anormal, et d'une règle de détection d'anomalie associée parmi les règles de détection d'anomalie qui est satisfaite par le segment le plus proche, et la génération d'une explication d'anomalie interprétable par l'homme construite à partir du segment anormal et de la règle de détection d'anomalie associée, où l'explication d'anomalie est une description de la raison pour laquelle le segment anormal ne satisfait pas à la même règle de détection d'anomalie que le segment le plus proche ; et
l'envoi, à un destinataire prévu du message électronique, d'une alerte comportant l'explication d'anomalie pour signaler le message électronique comme suspect.

**2.** Procédé selon la revendication 1, dans lequel la détection du segment anormal comprend :

la division du contenu en langage naturel du message électronique censé être envoyé ou écrit par l'individu particulier en premiers segments contenant au moins un mot,

l'extraction d'une intégration de mot pour chaque premier segment,

pour chaque intégration de mot, l'utilisation des règles de détection d'anomalie associées à l'individu particulier pour déterminer s'il existe une règle appropriée pour l'intégration de mot, et

lorsqu'il n'existe pas de règle appropriée pour une intégration de mot, l'étiquetage du premier segment correspondant à l'intégration de mot comme anormal.

3. Procédé selon la revendication 1 ou 2, comprenant en outre la dérivation des règles de détection d'anomalie par :
la création, par rapport à l'individu particulier, d'un modèle de regroupement à l'aide d'un contenu de message en langage naturel de l'ensemble de messages électroniques précédemment envoyés par l'individu particulier, dans lequel la création du modèle de regroupement comprend :

la division du contenu en langage naturel de chaque message électronique de l'ensemble en seconds segments contenant au moins un mot,

l'extraction d'une intégration de mot pour chaque second segment, et

le groupement des intégrations de mot extraites en groupes, où les intégrations de mot partageant un modèle de mots similaire sont attribuées au même groupe ; et

la dérivation des règles de détection d'anomalie à partir des seconds segments et de leurs groupes attribués, les règles formant une approximation interprétable du modèle de regroupement créé pour l'individu particulier.

4. Procédé selon la revendication 1, 2 ou 3, dans lequel la génération d'une explication d'anomalie interprétable par l'homme comprend :
la modification d'une copie de la règle associée à l'aide d'une formulation provenant du segment anormal de sorte que le segment anormal satisfait à la copie modifiée de la règle associée.

5. Procédé selon la revendication 4, dans lequel :

chaque règle a la forme $\{A_r, C_r\}$, où $A_r$ est un ensemble de conditions antécédentes et $C_r$ est un ensemble de conséquences qui sont vraies si les conditions antécédentes sont satisfaites par un échantillon d'entrée interrogé, chaque conséquent correspondant à un ID d'un groupe attribué à un segment et chaque antécédent correspondant à des positions de mot ; et

la modification d'une copie de la règle associée comprend la négation de chaque antécédent de la règle qui n'est pas satisfaite par le segment anormal, la conjonction de chaque antécédent nié avec un littéral du segment anormal qui occupe la même position, et le changement du conséquent de la règle pour indiquer que la règle concerne un segment anormal.

6. Procédé selon l'une quelconque des revendications 1 à 5, comprenant en outre le fait qu'au moins un procédé supplémentaire de classification de message électronique basé sur des règles utilisé par le destinataire prévu soit mis à jour sur la base de l'explication d'anomalie.

7. Appareil de traitement d'informations (10) pour signaler des anomalies dans une partie de texte en langage naturel d'un message électronique censé être envoyé ou écrit par un individu particulier, l'appareil comprenant :

un processeur (993) ; et
une mémoire stockant un modèle de regroupement (994) et des règles de détection d'anomalie pour attribuer du texte à des groupes dans le modèle de regroupement, le modèle de regroupement et les règles de détection d'anomalie étant dérivés d'un ensemble d'apprentissage de données de texte en langage naturel dérivées d'un ensemble de messages électroniques envoyés précédemment par l'individu particulier, et des instructions pour amener le processeur (993) à :

obtenir une intégration de mot pour un segment de la partie de texte en langage naturel ;
déterminer si l'intégration de mot s'inscrit dans un groupe quelconque dans le modèle de regroupement et, lorsqu'il est déterminé que l'intégration de mot ne s'inscrit dans aucun groupe dans le modèle de regroupement, étiqueter le segment comme étant un segment anormal ;
identifier un segment de données de texte dans l'ensemble d'apprentissage qui est le plus proche du texte dans le segment anormal, et une règle de détection d'anomalie associée parmi les règles de détection d'anomalie qui est responsable de l'attribution du segment le plus proche à un groupe dans le modèle de regroupement, et générer un explication d'anomalie interprétable par l'homme construite à partir du texte du segment anormal et de la règle de détection d'anomalie associée,

où l'explication d'anomalie est une description de la raison pour laquelle le segment anormal ne satisfait pas à la même règle de détection d'anomalie que le segment le plus proche ; et

émettre, à un destinataire prévu du message électronique, une alerte signalant une anomalie dans la partie de texte en langage naturel, l'alerte comportant l'explication d'anomalie.

8. Appareil selon la revendication 7, dans lequel les instructions amènent également le processeur (993) à :
créer le modèle de regroupement à l'aide de l'ensemble d'apprentissage de données de texte en langage naturel par :

la division de contenu en langage naturel d'éléments de données de texte dans l'ensemble en segments contenant au moins un mot, l'extraction d'une intégration de mot pour chaque segment, et

le groupement des intégrations de mot extraites en groupes, où les intégrations de mot partageant un modèle de mots similaire sont attribuées au même groupe ; et

dériver les règles de détection d'anomalie à partir des segments et de leurs groupes attribués, les règles formant une approximation interprétable du modèle de regroupement.

9. Appareil selon la revendication 7 ou 8, dans lequel la génération d'une explication d'anomalie interprétable par l'homme comprend :
la modification d'une copie de la règle responsable à l'aide d'un texte provenant du segment anormal de sorte que le segment anormal satisfait à la copie modifiée de la règle responsable.

10. Appareil selon la revendication 9, dans lequel :

chaque règle du modèle de regroupement a la forme $\{A_r, C_r\}$, où $A_r$ est un ensemble de conditions antécédentes et $C_r$ est un ensemble de conséquences qui sont vraies si les conditions antécédentes sont satisfaites par un échantillon d'entrée interrogé, chaque conséquent correspondant à un ID d'un groupe attribué à un segment et chaque antécédent correspondant à des positions de mot ; et

la modification d'une copie de la règle responsable comprend la négation de chaque antécédent de la règle qui n'est pas satisfaite par le texte du segment anormal, la conjonction de chaque antécédent nié avec un littéral du texte du segment anormal qui occupe la même position, et le changement du conséquent de la règle pour indiquer que la règle concerne un segment anormal.

11. Appareil selon l'une quelconque des revendications 7 à 10, dans lequel les instructions amènent également le processeur (993) à provoquer la mise à jour d'au moins un procédé supplémentaire de classification de message électronique basé sur des règles stocké dans la mémoire (994) sur la base de l'explication d'anomalie.

| Original word $w_i$ | — | cat | dog | fox | walk | jump | run | blue | green | brown | slow | quick | lazy |
|---|---|---|---|---|---|---|---|---|---|---|---|---|---|
| Encoding $v_i$ | 0 | 0 | 1 | 1 | 0 | 1 | 0 | 0 | 0 | 1 | 0 | 1 | 1 |

Figure 1

| Original word $w_i$ | — | cat | dog | fox | walk | jump | run | blue | green | brown | slow | quick | lazy |
|---|---|---|---|---|---|---|---|---|---|---|---|---|---|
| $v_{i,0}$ | 0 | 0 | 0 | 0 | 0 | 0 | 0 | 0 | 0 | 0 | 0 | 1 | 0 |
| $v_{i,1}$ | 0 | 0 | 0 | 0 | 0 | 0 | 0 | 0 | 0 | 1 | 0 | 0 | 0 |
| $v_{i,2}$ | 0 | 0 | 0 | 1 | 0 | 0 | 0 | 0 | 0 | 0 | 0 | 0 | 0 |
| $v_{i,3}$ | 0 | 0 | 0 | 0 | 0 | 1 | 0 | 0 | 0 | 0 | 0 | 0 | 0 |
| $v_{i,4}$ | 0 | 0 | 0 | 0 | 0 | 0 | 0 | 0 | 0 | 0 | 0 | 0 | 1 |
| $v_{i,5}$ | 0 | 0 | 1 | 0 | 0 | 0 | 0 | 0 | 0 | 0 | 0 | 0 | 0 |

Figure 2

| —0 | cat0 | dog0 | ... | slow0 | quick0 | lazy0 | ... | dog5 | ca t5 | ...5 | ... | slow5 | quick5 | lazy5 |
|---|---|---|---|---|---|---|---|---|---|---|---|---|---|---|
| 0 | 0 | 0 | | 0 | 1 | 0 | | 1 | 0 | 0 | | 0 | 0 | 0 |

Figure 3

21

$w_i$ = "The quick brown fox jumps over the lazy dog"

Input Layer $I_0$

| 0 | 1 | 1 | 0 | 1 | 0 | 0 | 0 | 1 | 0 | 1 | 1 |
|---|---|---|---|---|---|---|---|---|---|---|---|

100

Preprocessing → $v_i$

Hidden layers

Hidden feature layer $I_u$ → $u_i$

Hidden layers

| 0 | 1 | 1 | 0 | 1 | 0 | 0 | 0 | 1 | 0 | 1 | 1 |
|---|---|---|---|---|---|---|---|---|---|---|---|

Output Layer $I_m$

| cat | dog | fox | walk | jump | run | blue | green | brown | slow | quick | lazy |
|-----|-----|-----|------|------|-----|------|-------|-------|------|-------|------|
| 0 | 1 | 1 | 0 | 1 | 0 | 0 | 0 | 1 | 0 | 1 | 1 |

*word encoding $v_i$*

| 0.23 | 0.12 | 0.92 | -0.21 | 0.12 | 0.56 | 0.72 | 0.17 | 0.15 |
|------|------|------|-------|------|------|------|------|------|

*word embedding $u_i$*

Figure 4

Figure 5

Figure 6

|  | eats_meat | **four_legs** | swims | wings |
|---|---|---|---|---|
| dog | 1 | **1** | 1 | 0 |
| duck | 0 | **0** | 1 | 1 |
| eagle | 1 | **0** | 0 | 1 |
| monkey | 1 | **0** | 0 | 0 |
| mouse | 0 | **1** | 0 | 0 |

four_legs?

T     F

|  | **eats_meat** | swims | wings |
|---|---|---|---|
| dog | **1** | 1 | 0 |
| mouse | **0** | 0 | 0 |

eats_meat?

T   F

dog     mouse

|  | eats_meat | swims | **wings** |
|---|---|---|---|
| duck | 0 | 1 | **1** |
| eagle | 1 | 0 | **1** |
| monkey | 1 | 0 | **0** |

wings?

T     F

monkey

|  | eats_meat | four_legs | **swims** |
|---|---|---|---|
| duck | 0 | 0 | **1** |
| eagle | 1 | 0 | **0** |

swims?

T     F

$\neg$ four_legs $\wedge$ wings $\wedge$ swims $\rightarrow$ duck  - - - - duck     eagle

EP 3 913 882 B1

S1: USE ANOMALY DETECTION RULES
DERIVED FROM SET OF PREVIOUSLY-SENT
MESSAGES TO DETECT ANOMALOUS
SEGMENT

S2: FOR DETECTED ANOMALOUS SEGMENT,
IDENTIFY IN MESSAGE SET SEGMENT OF
TEXT CLOSEST TO TEXT IN ANOMALOUS
SEGMENT AND ASSOCIATED RULE
SATISFIED BY THE CLOSEST SEGMENT

S3: GENERATE ANOMALY EXPLANATION
BASED ON  ANOMALOUS SEGMENT AND
ASSOCIATED RULE

S4: SEND ALERT TO INTENDED RECIPIENT
INCLUDING ANOMALY EXPLANATION

Figure 7

S11: DIVIDE MESSAGE INTO SEGMENTS

S12: EXTRACT WORD EMBEDDING FOR EACH
SEGMENT

S13: USE ANOMALY DETECTION RULES TO DETERMINE
APPROPRIATE RULE FOR WORD EMBEDDING

S14: LABEL SEGMENT AS ANOMALOUS IF NO APPROPRIATE
RULE FOR WORD EMBEDDING

Figure 8

S111: DIVIDE CONTENT OF EACH MESSAGE IN SET
INTO SEGMENTS

↓

S112: EXTRACT WORD EMBEDDING FOR EACH
SEGMENT

↓

S113: GROUP EXTRACTED WORD EMBEDDINGS
SHARING SIMILAR PATTERNS OF WORDS INTO
CLUSTERS TO FORM CLUSTERING MODEL

↓

S114: DERIVE ANOMALY DETECTION RULES
APPROXIMATING CLUSTERING MODEL FROM SEGMENTS
AND THEIR ASSIGNED CLUSTERS

Figure 9

Figure 10

Figure 11

User Q PC

F$^Q$

1.1. to 1.4

M=M$^Q$

(Optional)

Request F$^Q$

20

10

User P PC

M (M$^{P \leftarrow Q}$)

Loving the weather today!

1.1. Pre-process

M'
(m', w)
love, weather, today

1.2. Encoding

v
(m', w, s)

1.3. Flatten

v'
(m', w x s)

1.4. Training

F (F$^{P \leftarrow Q}$)

1.5. Embedding

u
(m, n)

0.03 | 0.34 | 0.76 | ... | 0.56

1.6. Clustering

G (G$^{P \leftarrow Q}$)

C$_1$   C$_0$   C$_2$

1.7. Rule Extraction

R (R$^{P \leftarrow Q}$)

weather1 ∧ today2 → C$_0$
great0 ∧ weather1 ∧ ---2 → C$_0$
okay2 → C$_1$
right1 → C$_2$
right0 → C$_2$

Messages M ($M^{P \leftarrow Q}$)

(contains *m* messages)

| Hi UserP,<br>I'm loving the<br>weather today!<br>About that<br>meeting<br>tomorrow..... |
|---|

→ 1.1. Pre-process →

| Original message ID | Segment ID | Message segments M'<br>*Shape = (m', w)* | | |
|---|---|---|---|---|
| 0 | 0 | hi | userP | love |
| 0 | 1 | userP | love | weather |
| **0** | **2** | **love** | **weather** | **today** |
| 0 | 3 | weather | today | meeting |
| 0 | 4 | today | meeting | tomorrow |
| ... | ... | ... | ... | ... |
| m | m'-1 | week | kind | regards |
| m | m' | kind | regards | userQ |

→ Segment $M'_2$

love,
weather,
today

EP 3 913 882 B1

Figure 12

Figure 13

$M_{new}$

Great weather, right?

2.1. Pre-process

$M'_{new}$

great, weather, right

2.2. Encoding

$v_{new}$ (w, s)

| 1 | 0 | 0 | 0 | 0 |
| 0 | 0 | 0 | 0 | 1 |
| 0 | 1 | 0 | 0 | 0 |

2.3. Flatten

$v'_{new}$ (1, w x s)

| 1 | 0 | 0 | 0 | 0 | 0 | 0 | 0 | 0 | 0 | 1 | ... | 0 | 1 | 0 | 0 | 0 |

$R (R^{P \leftarrow Q})$    $M' (M^{P \leftarrow Q'})$    $G (G^{P \leftarrow Q})$    $F (F^{P \leftarrow Q})$

2.4. Embedding

3.1. Find nearest

2.5. Clustering

| 0.03 | 0.34 | 0.76 | ... | 0.56 |  $u_{new}$ (1, n)

$m'_{near}$ = love, weather, today

3.2. Find rule

Cluster not found          Cluster found          End

great0, weather1, right2          $R_{near}$ = weather1 $\wedge$ today2 $\rightarrow C_0$

3.3. Merge

$C_1$  $C_2$  $C_0$  $u_{new}$

$C_1$  $C_2$  $C_0$ $u_{new}$

**Explanation:** weather1 $\wedge \neg$today2 $\wedge$ right2 $\rightarrow$ Anomaly

**great0, weather1, right2**

love0, weather1, today2
**great0, weather1, today2**
great0, weather1, ---2

awful0, weather1, today2

*Cluster C$_0$*

*Cluster C$_2$*

send0, ---1, okay2

check0, first1, okay2

**check0, first1, right2**

training data
**test data**

contract0, right1, ---2

agree0, right1, ---2

contract0, awful1

*Cluster C$_1$*

Figure 14

**1**

Hi UserP,
**Great weather, <u>right</u>**?
Did you hear our passwords need updating?
Apparently we can update them at <u>this link</u>.
Cheers,
UserQ

**2**

**Caution:** ⊠
weather1 ∧ ¬today2 ∧ right2 → Anomaly

Figure 15

Figure 16

**EP 3 913 882 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190109863 A1